# DEMANDE DE BREVET EUROPEEN

(11) **EP 4 254 543 A1**
(43) Date de publication de la demande: **04.10.2023**
(21) Numéro de dépôt: 23166050.7
(22) Date de dépôt: 31.03.2023
(51) Int. Cl.: H01M 4/13, H01M 4/40, H01M 10/052, H01M 4/02, H01M 4/525, H01M 4/58

(54) **ÉLECTRODE NÉGATIVE SPÉCIFIQUE À BASE DE LITHIUM ET GÉNÉRATEUR ÉLECTROCHIMIQUE AU LITHIUM COMPRENANT UNE TELLE ÉLECTRODE NÉGATIVE**

(30) Priorité: 01.04.2022 FR 2202999
(71) Demandeur: Commissariat à l'énergie atomique et aux énergies alternatives, 75015 Paris (FR)
(72) Inventeur: CHAVILLON, Benoît, 38054 GRENOBLE CEDEX 09 (FR); LY, Clémence, 38054 GRENOBLE CEDEX 09 (FR); MAYOUSSE, Eric, 38054 GRENOBLE CEDEX 09 (FR)
(74) Mandataire: Brevalex

(57) **Abrégé**

L'invention a trait à une électrode négative pour générateur électrochimique au lithium caractérisée en ce qu'elle comprend, comme matériau actif, un alliage comprenant du lithium et du baryum, dans lequel le baryum est présent dans l'alliage à hauteur d'au plus 20% atomique.

## Description

### DOMAINE TECHNIQUE

La présente invention a trait à une électrode négative spécifique utilisable dans un dispositif de stockage d'énergie et, plus spécifiquement, un générateur électrochimique au lithium, ce générateur pouvant être un générateur électrochimique primaire (ou pile), lorsqu'il n'est pas rechargeable ou un générateur électrochimique secondaire (ou accumulateur) lorsqu'il est rechargeable.

La présente invention a trait également à un générateur électrochimique comprenant une telle électrode négative, ce générateur électrochimique présentant des propriétés électrochimiques efficaces tout en pouvant présenter une épaisseur d'électrode négative plus fine que pour une électrode comprenant uniquement du lithium métallique conférant ainsi un intérêt tout particulier pour les applications de puissance.

Le domaine de l'invention peut être défini comme celui des dispositifs de stockage d'énergie, en particulier celui des générateurs électrochimiques au lithium.

### ÉTAT DE LA TECHNIQUE ANTÉRIEURE

Les dispositifs de stockage d'énergie sont classiquement des générateurs électrochimiques fonctionnant sur le principe de cellules électrochimiques aptes à délivrer un courant électrique grâce à la présence dans chacune d'entre elles d'un couple d'électrodes (respectivement, une électrode positive et une électrode négative) séparé par un électrolyte, les électrodes comprenant des matériaux spécifiques aptes à réagir selon une réaction d'oxydoréduction, moyennant quoi il y a production d'électrons à l'origine du courant électrique et productions d'ions qui vont circuler d'une électrode à l'autre par le biais d'un électrolyte.

Des générateurs électrochimiques de ce type les plus usités actuellement sont les suivants :
*les générateurs électrochimiques Ni-MH utilisant de l'hydrure métallique et de l'oxyhydroxyde de nickel comme matériaux d'électrode ;
*les générateurs électrochimiques Ni-Cd utilisant du cadmium et de l'oxyhydroxyde de nickel comme matériaux d'électrode ;
*les générateurs électrochimiques Acide-Plomb utilisant du plomb et de l'oxyde de plomb PbOz comme matériaux d'électrode ; et
*les générateurs électrochimiques au lithium, tels que ceux utilisant du lithium métallique comme matériau actif de l'électrode négative.

Du fait que le lithium métallique est un élément solide particulièrement léger et présente un potentiel électrochimique le plus faible, permettant ainsi l'accès à une densité d'énergie massique intéressante, les générateurs électrochimiques au lithium sont des candidats particulièrement favorables pour détrôner les autres types d'accumulateurs mentionnés ci-dessus.

Plus spécifiquement, le lithium métallique, qui peut constituer le matériau actif de l'électrode négative, est un matériau utilisable dans la plupart des systèmes tant son énergie massique et volumique est importante. En effet, le lithium présente une densité de 0,534 g/cm³ et une énergie massique de 3861 mAh/g ainsi qu'une densité d'énergie volumique de 2061 mAh/cm³. Ces valeurs restent très élevées par rapport à celles obtenues avec d'autres matériaux d'électrode négative, notamment grâce à la réaction Li → Li⁺ + e⁻, cette réaction impliquant l'échange d'un seul électron par atome de lithium, lequel est très léger et générant ainsi une quantité d'énergie importante pour un faible rapport volume/masse.

L'un des inconvénients lié à l'utilisation du lithium est dû, d'une part, à la formation possible de peroxyde de lithium, lors des processus de décharge et, d'autre part, à la formation éventuelle de dendrites de lithium, lors des processus de charge répétés, qui peuvent court-circuiter l'accumulateur et l'endommager.

Par ailleurs, le lithium peut poser des problèmes sécuritaires, du fait de sa température de fusion de 180°C et peut présenter des difficultés de manipulation pour la fabrication des électrodes négatives.

En effet, le lithium est un métal très réactif notamment lorsqu'il est soumis à un environnement comportant de l'eau, de l'azote et/ou de l'oxygène et présente une capacité d'adhérence sur tous types de métaux ou alliages, tels que l'inox, l'acier voire même sur certains polymères fluorés. Ainsi, il peut s'avérer difficile à manipuler et à mettre en forme, par exemple, par laminage ou extrusion sauf à prendre des précautions particulières, notamment en travaillant sous atmosphère neutre et dénuée d'humidité et/ou en travaillant avec des outils revêtus d'une couche de polymère non réactif, tel que du polyéthylène basse densité.

Enfin, pour une utilisation dans des générateurs électrochimiques, tels que les piles et les accumulateurs, il peut être intéressant d'utiliser pour constituer l'électrode négative des feuillards de lithium très fins, par exemple, d'une épaisseur allant de 10 µm à 50 µm en vue notamment d'augmenter les densités d'énergie et de puissance et pour limiter le fait que l'on mette trop de capacité à l'électrode négative par rapport à ce que l'on a comme capacité disponible à l'électrode positive. Toutefois, une telle épaisseur est impossible à atteindre avec des laminoirs standards, le lithium étant trop malléable et se déchirant à des épaisseurs plus importantes et lorsque de tels feuillards sont disponibles dans le commerce, ils sont très onéreux, même lorsqu'ils sont déjà prélaminés sur des collecteurs de courant (par exemple, un feuillard de cuivre).

Aussi, au vu des inconvénients mentionnés ci-dessus et notamment ceux relatifs à la difficulté de manipulation de lithium pour réaliser des électrodes négatives de faibles épaisseurs, les auteurs de la présente invention se sont fixé pour objectif de proposer un nouveau type d'électrode négative à base de lithium utilisable dans des générateurs électrochimiques au lithium ainsi qu'un nouveau type de générateur électrochimique au lithium comprenant ce type d'électrode négative.

### EXPOSÉ DE L'INVENTION

Ainsi, l'invention a trait à une électrode négative pour générateur électrochimique au lithium caractérisée en ce qu'elle comprend, comme matériau actif, un alliage comprenant du lithium et du baryum, dans lequel le baryum est présent dans l'alliage à hauteur d'au plus 20% atomique.

Avant d'entrer plus en détail dans l'exposé de cette invention, nous précisons les définitions suivantes.

Par % atomique, on entend, classiquement, dans ce qui précède et ce qui suit, le rapport correspondant au rapport du (nombre total d'atomes de baryum/nombre total d'atomes de l'alliage)*100.

Par électrode négative, on entend, classiquement, dans ce qui précède et ce qui suit, l'électrode qui fait office d'anode, quand le générateur électrochimique débite du courant (c'est-à-dire lorsqu'il est en processus de décharge) et qui fait office de cathode, lorsque le générateur électrochimique est en processus de charge (dans ce dernier cas, le générateur électrochimique peut être qualifié d'accumulateur, du fait qu'il peut être soumis à un processus de charge et de décharge).

Par matériau actif de l'électrode négative, on entend, classiquement, dans ce qui précède et ce qui suit, le matériau qui est directement impliqué dans la réaction d'oxydation se déroulant au niveau de l'électrode négative, ce matériau actif étant, dans le cadre de cette invention, un alliage comprenant du lithium et du baryum.

L'électrode négative comportant un tel matériau actif peut être facilement préparée par lamination et présenter des épaisseurs faibles compatibles pour obtenir une amélioration de la densité de puissance.

Par ailleurs, le potentiel du baryum est très proche de celui du lithium à 0,13 V vs. Li. Ainsi, les alliages de lithium et de baryum devraient avoir un potentiel de travail très comparable au lithium, ce qui devrait permettre d'avoir un fonctionnement des générateurs contenant ces alliages similaires à des générateurs contenant du lithium pur.

L'alliage comprenant du lithium et du baryum est un alliage, dans lequel le baryum est présent dans l'alliage à hauteur d'au plus 20% atomique, plus spécifiquement de 2 à 20% atomique et, encore plus spécifiquement de 2 à 10% atomique.

L'électrode négative peut être constituée uniquement du matériau actif, qui est l'alliage comprenant du lithium et du baryum tel que mentionné ci-dessus.

D'un point de vue structural, l'électrode négative peut se présenter, avantageusement, sous forme d'une feuille ou plaque présentant une épaisseur allant de 5 à 50 µm.

Avantageusement, l'alliage comprenant du lithium et du baryum constitutif du matériau actif de l'électrode négative peut être un alliage comportant exclusivement du lithium et du baryum, ce qui signifie que l'alliage en question comporte du baryum à hauteur d'au plus 20% atomique et du lithium à hauteur d'au moins 80% atomique.

D'un point de vue structural, lorsque l'alliage de lithium et de baryum est constitué exclusivement de lithium et de baryum et que la teneur en baryum est de 20% atomique, l'alliage de lithium et de baryum se présente sous forme d'un composé intermétallique de formule BaLi₄. Pour uneteneur en baryum inférieure à 20% atomique, l'alliage se présentera sous forme d'une solution solide consistant en une matrice de lithium, dans laquelle un composé défini BaLi₄ est formé.

Les auteurs de la présente invention ont pu mettre en évidence qu'un alliage comprenant du lithium et du baryum se lamine facilement et présente de bonnes propriétés mécaniques notamment en termes de résistance à la traction, notamment pour des épaisseurs telles que définies ci-dessus. Qui plus est, une électrode comprenant un tel alliage peut être produite à des coûts de fabrication moindres par rapport à une électrode présentant une même épaisseur d'électrode en lithium métallique.

Avantageusement, l'électrode négative peut être autosupportée, c'est-à-dire qu'elle ne nécessite pas d'être apposée sur un support et, plus spécifiquement, qu'elle ne nécessite pas d'être apposée sur un collecteur de courant. En variante, elle peut être associée à un support, par exemple, du type collecteur de courant, qui peut être un feuillard ou une grille en au moins un élément métallique conducteur de l'électricité, tel que du cuivre, du nickel, du tantale, du titane, du tungstène, de l'inox, lequel feuillard ou grille pouvant présenter une épaisseur allant jusqu'à 500 µm.

L'alliage constitutif du matériau actif de l'électrode négative peut comprendre, outre du lithium et du baryum, un troisième élément choisi parmi le magnésium, le zinc, l'indium, le calcium, le gallium et l'aluminium, ce troisième élément pouvant être présent en une teneur allant de 2 à 20% atomique et, de préférence, de 2 à 10% atomique. Ce type d'alliage peut être qualifié d'alliage ternaire. Plus spécifiquement, l'alliage constitutif du matériau actif de l'électrode négative peut être un alliage de lithium, de baryum et d'aluminium, un alliage de lithium, de baryum et d'indium ou un alliage de lithium, de baryum et de zinc.

Les électrodes négatives sont particulièrement adaptées pour entrer dans la constitution de générateurs électrochimiques au lithium (qu'ils s'agissent de piles ou d'accumulateurs).

Ainsi, l'invention a trait également à un générateur électrochimique comprenant au moins une cellule électrochimique comprenant une électrode positive comprenant, comme matériau actif, un matériau d'insertion du lithium; une électrode négative et un électrolyte conducteur d'ions lithium disposé entre ladite électrode négative et ladite électrode positive, caractérisé en ce que l'électrode négative est telle que définie ci-dessus.

Par électrode positive, on entend, classiquement, dans ce qui précède et ce qui suit, l'électrode qui fait office de cathode, quand le générateur électrochimique débite du courant (c'est-à-dire lorsqu'il est en processus de décharge) et qui fait office d'anode lorsque le générateur électrochimique est en processus de charge (dans ce dernier cas, le générateur électrochimique peut être qualifié d'accumulateur, du fait qu'il peut être soumis à un processus de charge et de décharge).

L'électrode positive du générateur électrochimique de l'invention comprend, comme matériau actif, un matériau d'insertion du lithium et, plus spécifiquement un matériau choisi parmi les oxydes lithiés comprenant au moins un élément métallique de transition, les phosphates lithiés comprenant au moins un élément métallique de transition, du dioxyde de manganèse et les mélanges de ceux-ci.

Comme oxyde lithié comprenant au moins un élément métallique de transition, on peut citer un oxyde de formule suivante :

LiMOz

dans laquelle M est un élément choisi parmi Ni, Co, Mn, AI, Mg et les mélanges de ceux-ci, et de préférence, encore, avec M étant un élément choisi parmi Ni, Co, Mn, Al et les mélanges de ceux-ci.

D'un point de vue structural, l'oxyde de formule ci-dessus présente une structure lamellaire.

A titre d'exemples de tels oxydes, on peut citer les oxydes lithiés LiCoOz, LiNiOz et les oxydes mixtes Li(Ni,Co,Mn)O₂ (et plus spécifiquement, LiNiₓMn_{y}Co_{z}O₂, dans lequel x+y+z=1, tel que Li(Ni_{1/3}Mn_{1/3}Co_{1/3})O₂ connu également sous la dénomination NMC) ou Li(Ni_{0,6}Mn_{0,2}Co_{0,2})O₂ (connu également sous la dénomination NMC666), Li(Ni,Co,Al)O₂ (et plus spécifiquement, LiNiₓCo_{y}Al_{z}O₂, dans lequel x+y+z=1, tel que Li(Ni_{0,8}Co_{0,15}Al_{0,05})O₂ connu également sous la dénomination NCA) ou Li(Ni,Co,Mn,Al)O₂.

Comme oxyde lithié comprenant au moins un élément métallique de transition, on peut citer également les oxydes lithiés de structure spinelle, tels que LiMn₂O₄.

Comme exemples de composés phosphates lithiés comprenant au moins un élément métallique de transition, on peut citer les composés de formule LiM¹PO₄, où M¹ est choisi parmi Fe, Mn, Co et les mélanges de ceux-ci, tel que LiFePO₄.

Le matériau actif de l'électrode positive peut être présent à hauteur de 80 à 95% en masse de la masse totale de l'électrode positive.

En outre, l'électrode positive peut comprendre au moins un additif conducteur électronique et/ou au moins un liant, tel qu'un liant polymérique, lequel peut permettre d'assurer la cohésion de l'électrode positive.

L'additif conducteur électronique peut être choisi parmi les noirs de carbone, les noirs d'acétylène, du graphite (en particulier, de la poudre de graphite), les fibres de carbone (en particulier, les fibres de carbone obtenues en phase vapeur connues sous l'abréviation VGCF), des nanotubes de carbone, du titane (en particulier, sous forme de poudre), du nickel (en particulier, sous forme de poudre ou de mousse), de l'aluminium (en particulier, sous forme de poudre), de l'acier inoxydable (en particulier, sous forme de poudre) et des mélanges de ceux-ci.

Le ou les liants peuvent être, en particulier, choisis parmi les liants polymériques, tels que :
*les (co)polymères fluorés éventuellement conducteurs de protons, tels que :
   - les polymères fluorés, tels qu'un polytétrafluoroéthylène (connu sous l'abréviation PTFE), un polyfluorure de vinylidène (connu sous l'abréviation PVDF) ;
   - les copolymères fluorés, tels qu'un poly(fluorure de vinylidène-co-hexafluoropropène) (connu sous l'abréviation PVDF-HFP) ;
   - les polymères fluorés conducteurs de protons, tels que le Nafion^{®} ;
*les polymères élastomères, tels qu'un copolymère styrène-butadiène (connu sous l'abréviation SBR), un copolymère éthylène-propylène-monomère diénique (connu sous l'abréviation EPDM) ;
*les polymères de la famille des alcools polyvinyliques ;
*les polymères cellulosiques, tel qu'une carboxyméthylcellulose sodique ; et
*les mélanges de ceux-ci.

De préférence, le liant utilisé est un liant à base d'un polymère fluoré, tel qu'un polytétrafluoroéthylène, un polyfluorure de vinylidène et les mélanges de ceux-ci, ce type de liant permettant l'obtention d'un bon réseau percolant.

En outre, l'électrode positive peut être également associée à un support destiné, comme son nom l'indique, à supporter les ingrédients susmentionnés, ce support pouvant, en outre, contribuer à assurer une bonne tenue mécanique de l'électrode et une bonne conduction électronique (auquel cas il peut être qualifié de support collecteur de courant).

On peut ainsi qualifier ce type d'électrode supportée.

Ce support peut se présenter sous forme d'une mousse, d'une grille ou encore d'une plaque et peut être en un matériau comprenant un métal ou un alliage métallique ou encore en un matériau carboné.

Il peut s'agir, tout particulièrement, d'un support en titane, d'un support en aluminium, d'un support en nickel, d'un support en tantale ou d'un support en acier inoxydable, ces supports pouvant être sous forme de feuilles ou de grilles.

L'électrolyte destiné à entrer dans la constitution des générateurs électrochimiques de l'invention peut être un électrolyte liquide comprenant au moins un solvant organique et au moins un sel de lithium.

Plus spécifiquement, il peut comprendre :
- comme solvant(s), un ou plusieurs solvants organiques choisis parmi les solvants carbonates, les solvants éthers, les solvants amides, les solvants sulfoxides, les solvants lactones, les solvants lactames, les solvants nitriles, les solvants esters, les solvants sulfites et les mélanges de ceux-ci ;
- au moins un sel de lithium ; et
- éventuellement un additif autre qu'un sel de lithium.

A titre d'exemples, le sel de lithium peut être choisi dans le groupe constitué par LiPF₆, LiClO₄, LiBF₄, LiAsF₆, LiSbF₆, LiAlCl₄, LiGaCl₄, LiCF₃SO₃, LiC(SO₂CF₃)₃, le bis(trifluorométhylsulfonyl)imidure de lithium (connu sous l'abrévition LiTFSI) LiN[SO₂CF₃]₂, LiSCN, le nitrate de lithium LiNO₃, le bis(oxalato)borate de lithium (connu sous l'abréviation LIBOB), le difluoro(oxalato)borate de lithium (connu sous l'abréviation LiDFOB), le bis(fluorosulfonyl)imidure de lithium (connu sous l'abréviation LiFSI), LiPF₃(CF₂CF₃)₃ (connu sous l'abréviation LiFAP), le trifluorométhanesulfonate de lithium LiCF₃SO₃ (connu sous l'abréviation LiTf), le fluorosulfonate de lithium LiSO₃F, Lic₆F₅SO_{3,} LiO₃SCF₂CF₃, LiO₂CCF₃,LiB(C₆H₅)₄ et les mélanges de ceux-ci.

Le sel de lithium peut être compris, dans l'électrolyte, à hauteur de 0,1 M à 2 M, de préférence, de 0,5 à 1,5 M.

Comme solvant organique appartenant à la famille des solvants carbonates, on peut citer le carbonate d'éthylène (connu sous l'abréviation EC), le carbonate de propylène (connu sous l'abréviation PC), le carbonate de diméthyle (connu sous l'abréviation DMC), le carbonate de diéthyle (connu sous l'abréviation DEC), le carbonate de fluoroéthylène (connu sous l'abréviation FEC) et les mélanges de ceux-ci.

Comme solvant organique appartenant à la famille des solvants éthers, on peut citer le tétrahydrofurane (connu sous l'abréviation THF), le 1, 2-diméthoxyéthane (connu sous l'abréviation DME), le diglyme, le triglyme, le tétraglyme ou tétraéthylèneglycoldiméthyléther (connu sous l'abréviation TEGDME), le méthoxybenzène.

Comme solvant organique appartenant à la famille des solvants amides, on peut citer le diméthylformamide, le diméthylacétamide.

Comme solvant organique appartenant à la famille des solvants sulfoxides, on peut citer le diméthylsulfoxide (connu sous l'abréviation DMSO).

Comme solvant organique appartenant à la famille des solvants lactones, on peut citer la γ-butyrolactone, la γ-valérolactone, la δ-valérolactone, la ε-caprolactone, la γ-caprolactone.

Comme solvant organique appartenant à la famille des solvants lactames, on peut citer la N-méthyl-2-pyrrolidone (connue sous l'abréviation NMP).

Comme solvant organique appartenant à la famille des solvants nitriles, on peut citer l'acétonitrile.

Comme solvant organique appartenant à la famille des solvants esters, on peut citer l'acétate de méthyle.

Comme solvant organique appartenant à la famille des solvants sulfites, on peut citer le diméthylsulfite.

Le solvant peut être utilisé sous forme d'un seul solvant ou d'un mélange de solvants distincts (pouvant former ainsi un solvant binaire ou un solvant ternaire).

Par exemple, le solvant peut consister en un mélange de plusieurs solvants carbonates, et plus spécifiquement un mélange de deux solvants carbonates, un mélange répondant à cette spécificité étant le mélange carbonate de fluoroéthylène/carbonate de diméthyle.

L'électrolyte liquide susmentionné peut être amené, dans la ou les cellules électrochimiques des générateurs électrochimiques de l'invention, à imprégner un séparateur, lequel est disposé entre l'électrode positive et l'électrode négative de la cellule électrochimique.

Ce séparateur peut être en un matériau poreux apte à accueillir dans sa porosité l'électrolyte liquide.

Ce séparateur peut consister en une membrane en un matériau choisi parmi les fibres de verre (et plus, spécifiquement, un non-tissé de fibres de verre), un matériau polymérique, tel qu'un polytéréphtalate (comme un polytéréphtalate d'éthylène, connu sous l'abréviation PET), une polyoléfine (par exemple, un polyéthylène, un polypropylène), un polyalcool vinylique, un polyamide, un polytétrafluoroéthylène (connu sous l'abréviation PTFE), un polychlorure de vinyle (connu sous l'abréviation PVC), un polyfluorure de vinylidène (connu sous l'abréviation PVDF). Le séparateur peut présenter une épaisseur allant de 5 à 300 µm.

L'électrolyte peut être également un liquide ionique, par exemple, du bis(trifluorométhylsulfonyl)imidure de 1-méthyl-1-propylpipéridinium, du bis(trifluorométhylsulfonyl)imidure de 1-n-butyl-1-méthylpyrrolidinium et des mélanges de ceux-ci.

L'électrolyte peut consister également en un électrolyte solide, par exemple, une membrane céramique conductrice d'ions lithium, dénommée classiquement LISICON (correspondant à la terminologie anglaise Lithium Super lonic Conductor), cette membrane céramique pouvant être du type perovskite, tel que (La,Li)TiO₃ (connu sous l'abréviation LLTO), du type garnet, tel que Li₅La₃Ta₂O₁₂, Li₆La₃Zr₂O_{11,5}, du type phosphate, tel que Li₁₊ₓAlₓGe₂₋ₓ(PO₄)₃ avec 0<x<0,8 (connu sous l'abréviation LAGP), Li₁₊ₓTi₂₋ₓAlₓ(PO₄)₃ avec 0,25<x<0,3 et Li_{1+x+y}Ti₂₋ₓAlₓSi_{y}(PO₄)_{3-y} avec 0,2<x<0,25 et 0<y<0,05 (connu sous l'abréviation LTAP).

L'électrolyte peut être également un électrolyte polymère tel qu'une membrane en polyoxyde d'éthylène.

Les générateurs électrochimiques de l'invention peuvent être inclus dans une enceinte rigide, par exemple, en acier inoxydable, en acier nickelé, en aluminium ou encore en titane ou dans une enceinte souple.

Les générateurs électrochimiques de l'invention peuvent être adaptés à différents types de formats, tels que le format du type pile bouton, les formats cylindriques, en particulier, les formats AAA, AA, C, D et DD ; les formats bobinés ou spiralés ; le format prismatique, le format de type pochette (connu sous l'appellation anglo-saxonne « pouch cell »).

Un générateur électrochimique spécifique à l'invention est un générateur électrochimique comprenant au moins une cellule électrochimique comprenant :
- une électrode négative constituée d'une feuille en alliage de lithium et de baryum comprenant une teneur en baryum de 2% atomique ou de 10% atomique;
- une électrode positive comprenant un mélange comprenant, comme matériau actif, du LiNi_{0,6}Mn_{0,2}Co_{0,2}O₂ ;
- un séparateur poreux disposé entre ladite électrode négative et ladite électrode positive, ledit séparateur étant imprégné d'un électrolyte comprenant un sel de lithium LiPF₆ dans un mélange de solvants carbonates (par exemple, un mélange binaire comprenant du carbonate de fluoroéthylène et du carbonate de diméthyle).

Ce générateur électrochimique est un générateur électrochimique secondaire et peut donc être qualifié d'accumulateur.

Les générateurs électrochimiques de l'invention peuvent être réalisés par des techniques classiques à la portée de l'homme du métier, par exemple, par empilement des différents éléments constitutifs du générateur électrochimique (à savoir, électrode négative, électrode positive et séparateur), cet empilement pouvant être maintenu dans un boîtier. L'alliage constitutif de l'électrode négative peut être réalisé par fusion de lithium et de baryum, par exemple, sur une plaque chauffante, à une température pouvant aller de 145 à 400°C, sous une atmosphère neutre (par exemple, une atmosphère d'argon ou d'azote) suivie, après mélange, d'une trempe du mélange fondu pour former rapidement l'alliage. L'alliage ainsi obtenu peut être mis sous forme d'une plaque ou feuille par laminage en vue d'entrer dans la constitution de l'électrode négative.

L'invention va maintenant être décrite aux exemples, qui suivent, donnés à titre indicatif et non limitatif.

### BRÈVE DESCRIPTION DES FIGURES

[Fig. 1] est un graphique illustrant l'évolution du potentiel moyen U (en V) en fonction du nombre de cycles N, la courbe a) étant relative au potentiel de charge et la courbe b) étant relative au potentiel de décharge, pour la cellule exemplifiée à l'exemple 2.
[Fig. 2] est un graphique représentant l'évolution du potentiel U (en V) en fonction du temps T (en h), la courbe a) étant relative à la première cellule et la courbe b) étant relative à la deuxième cellule de l'exemple 3.
[Fig. 3] est un graphique illustrant l'évolution de la capacité C (en mAh/g) en fonction du nombre de cycles N, la courbe a) étant relative à la première cellule et la courbe b) étant relative à la deuxième cellule de l'exemple 3.
[Fig. 4] est un graphique illustrant l'évolution du potentiel U (en V) en fonction de la durée T (en h) pour la troisième cellule de l'exemple 3.
[Fig. 5] est un graphique illustrant l'évolution de la contrainte C (en MPa) en fonction de la déformation D (en %) de l'exemple 4.
[Fig. 6] est un graphique illustrant l'évolution du potentiel E (en V) en fonction du tempsT (en h), la courbe a) étant relative à l'alliage LiZn, la courbe b) étant relative à l'alliage LiZnBa, la courbe c) étant relative à la l'alliage LiAI, la courbe d) étant relative à l'alliage LiAlBa, la courbe e) étant relative à l'alliage Liln et la courbe f) étant relative à l'alliage LilnBa pour l'exemple 4.

### EXPOSÉ DÉTAILLÉ DE MODES DE REALISATIONS

### EXEMPLE 1

L'exemple ci-dessous illustre la synthèse de plusieurs matériaux constitués d'un alliage de lithium et de baryum et la détermination de leurs propriétés mécaniques.

Plus précisément, il est préparé un alliage de lithium et de baryum comportant 2% atomique de baryum et un alliage de lithium et de baryum comportant 10% atomique de baryum.

Pour ce faire, il est fondu sur une plaque chauffante sous atmosphère d'argon du lithium métallique et du baryum métallique dans les proportions requises et, après mélange, une trempe du milieu fondu obtenu est réalisée pour former rapidement un matériau solide. Il est obtenu à l'issue de ces manipulations des boules de matériau, qui refroidissent très rapidement une fois déposées sur des plaques de métal.

Les boules de matériau obtenues se laminent facilement par rapport à du lithium pur et plus facilement par rapport à des alliages de lithium et de calcium. En particulier, elles se laminent facilement avec des laminoirs manuels jusqu'à des épaisseurs de 20-25 µm et se présentent sous forme de films brillants.

### EXEMPLE 2

L'exemple suivant illustre une cellule électrochimique à électrolyte solide conforme à l'invention avec l'utilisation d'un alliage de lithium et de baryum avec une teneur en baryum de 2% atomique.

Cette cellule électrochimique est une cellule en configuration d'électrodes dite symétrique, afin de tester le fonctionnement d'une électrode constituée d'un alliage de lithium et de baryum avec une teneur en baryum de 2% atomique, la cellule se présentant sous forme d'un sachet souple avec des électrodes d'une surface de 10 cm² et l'électrolyte solide se présentant sous forme d'une membrane en polyoxyde d'éthylène (POE) principalement de la marque Osaka Soda.

Cette cellule est soumise à un courant moyen chargé/déchargé de 0,3 mA/cm² pour une capacité échangée de 1 mAh/cm², le test étant effectué à 60°C pour permettre le fonctionnement de la membrane échangeuse d'ions.

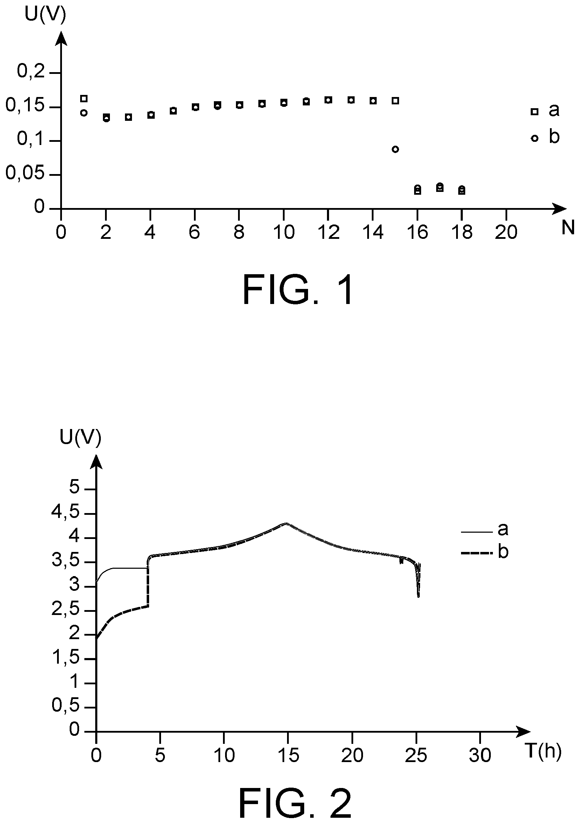

Les résultats sont reportés sur la figure 1 illustrant l'évolution du potentiel moyen U (en V) en fonction du nombre de cycles N, la courbe a) étant relative au potentiel de charge et la courbe b) étant relative au potentiel de décharge. Tant que le potentiel moyen est stable et supérieur à 0,1 V, cela dénote un bon fonctionnement de la cellule, contrairement où le potentiel chute drastiquement et dénote un dysfonctionnement. Dans notre cas de figure, le test démontre une durabilité de 15 cycles avant le dysfonctionnement, ce qui est suffisant pour démontrer le bon fonctionnement de l'alliage utilisé pour la constitution des électrodes.

### EXEMPLE 3

L'exemple suivant illustre une cellule électrochimique à électrolyte liquide conforme à l'invention (dite ci-après première cellule ou BaLi dans le tableau 1 ci-dessous) avec l'utilisation d'un alliage de lithium et de baryum avec une teneur en baryum de 2% atomique, cette cellule comprenant :
- une électrode négative constituée d'un disque de 14 mm de diamètre et composée d'un alliage de lithium et de baryum à hauteur de 2% atomique de baryum, ladite électrode présentant une épaisseur de 100 µm et une surface de 1,54 cm² ;
- une électrode positive constituée d'un disque de 16 mm de diamètre, ladite électrode étant composée d'une couche comprenant du LiNi_{0,6}Mn_{0,2}Co_{0,2}O₂(90,5% massique), du polyfluorure de vinylidène (5% massique) et du noir de carbone Super P^{®} (4,5% massique), cette couche étant déposée sur un feuillard en aluminium présentant une épaisseur de 20 µm et le grammage en LiNi_{0,6}Mn_{0,2}Co_{0,2}O₂ étant d'environ 25 mg/cm², soit une capacité de pile d'environ 4 mAh/cm² ;
- entre l'électrode négative et l'électrode positive, un séparateur du type Celgard 2400^{®} sous forme d'un disque de 16,5 mm de diamètre et d'une surface de 2 cm², ledit séparateur étant imprégné d'un électrolyte constitué d'un mélange de solvants carbonates (carbonate de fluoroéthylène/carbonate de diméthyle) en proportions volumiques respectives 20/80 et d'un sel de lithium LiPF₆ 1M.

Une autre cellule non conforme à l'invention (dite ci-après deuxième cellule ou Li dans le tableau 1 ci-dessous) a été réalisée en parallèle, cette deuxième cellule répondant aux mêmes spécificités que la première cellule, si ce n'est que l'alliage de lithium et de baryum a été remplacé par du lithium pur.

Tout d'abord, ces deux cellules sont formées électrochimiquement à 60°C durant un cycle de formation à C/10 et D/10. Cela permet de valider le bon fonctionnement des électrodes. Le tableau 1 ci-dessous représente le résultat de cette formation.

**[Table 1]**

| Cellule | Capacité en charge (mAh) | Capacité en décharge (mAh) | Energie en charge (mWh) | Energie en décharge (mWh) | Réversibilité (%) | Irréversibilité (%) |
|---|---|---|---|---|---|---|
| BaLi | 7,2 | 6,9 | 28,0 | 26,2 | 95,4 | 4,6 |
| Li | 7,0 | 6,6 | 26,9 | 25,1 | 94,5 | 5,5 |

La figure 2 illustre le résultat de ce cycle de formation via un graphique représentant l'évolution du potentiel U (en V) en fonction du temps T (en h), la courbe a) étant relative à la première cellule et la courbe b) étant relative à la deuxième cellule.

Sur la figure, les deux courbes sont superposées, ce qui montre que l'utilisation d'un alliage ne bouleverse pas la tension de la cellule durant le test. Par ailleurs, la superposition montre aussi que l'électrode positive est utilisée de la même façon. L'usage de l'alliage n'entrave donc pas du tout le fonctionnement de la cellule au global.

Par ailleurs, d'après le tableau, on remarque que les deux cellules sont très homogènes, comme c'est visible sur la figure. Ainsi, cela confirme la possibilité d'utiliser un alliage de lithium et de baryum dans des technologies de batterie sans altérer le fonctionnement des cellules.

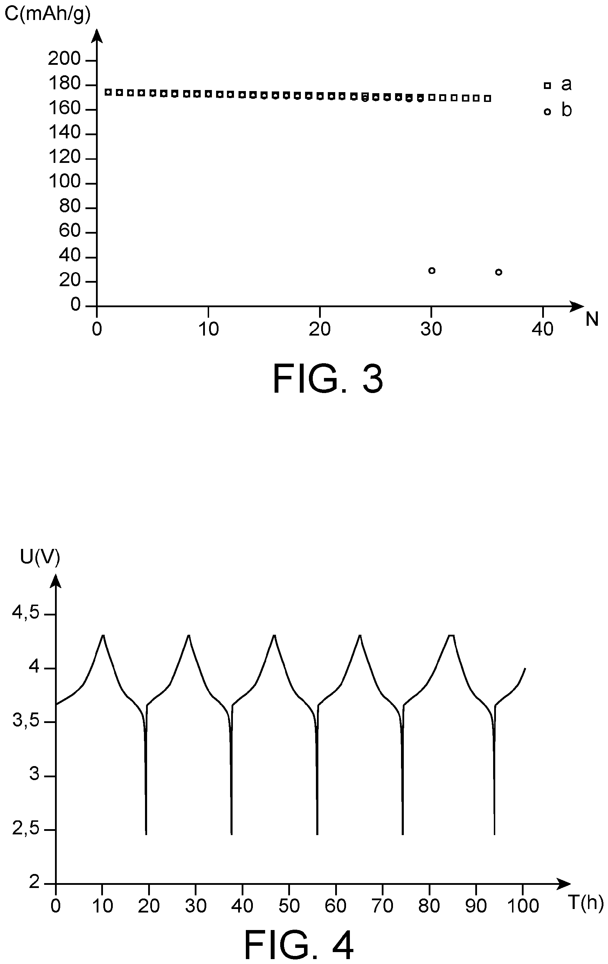

Les deux cellules sont ensuite placées en cyclage simple à température ambiante pour vérifier le fonctionnement à cette température de l'alliage. Le résultat de ce cyclage est représenté sur la figure 3, qui est un graphique illustrant l'évolution de la capacité C (en mAh/g) en fonction du nombre de cycles N, la courbe a) étant relative à la première cellule et la courbe b) étant relative à la deuxième cellule.

Sur cette figure, on remarque encore une fois l'homogénéité des résultats entre la première cellule et la deuxième cellule. Cela démontre qu'à température ambiante, il n'y a pas non plus de différence de fonctionnement entre ces deux électrodes. Par ailleurs, dans cet exemple précis, la cellule contenant l'alliage présente un défaut de fonctionnement plus tardif que la cellule fonctionnant avec le lithium pur.

Un dernier essai a été réalisé avec une cellule similaire à la première cellule, si ce n'est que l'électrode négative est désormais une électrode composée d'un alliage de lithium et de baryum à hauteur de 10% atomique de baryum (dite troisième cellule), ladite troisième cellule étant soumise à une formation et une mise en cyclage à température ambiante (23°C) durant un cycle de formation à C/10 et D/10. Des données semblables sont obtenues en formation par rapport à la première cellule.

La figure 4 représente l'évolution du potentiel U (en V) en fonction de la durée T (en h).

Il ressort que cette cellule fonctionne aussi de façon très correcte à un potentiel identique à une cellule contenant du lithium métallique. Ceci démontre le bon fonctionnement d'une cellule comportant, comme électrode négative, une électrode en un alliage de lithium et de baryum avec 10% atomique de baryum.

### EXEMPLE 4

Le présent exemple illustre la synthèse de plusieurs matériaux constitués d'un alliage ternaire de lithium, de baryum et d'un autre élément métallique, ces matériaux ayant été obtenus par la technique de synthèse dans un bain fondu. Pour cela, la quantité voulue de lithium métal et des éléments à associer est introduite et chauffée à 400°C. Le bain est ensuite agité pour absorption des éléments à associer avec le lithium métallique.

Les matériaux préparés sont les suivants :
- une première série de matériaux à base d'aluminium avec un matériau en alliage de lithium et d'aluminium comportant 2% atomique d'aluminium et un matériau en alliage de lithium, d'aluminium et de baryum comportant 2% atomique d'aluminium et 2% atomique de baryum ;
- une deuxième série de matériaux à base d'indium avec un matériau en alliage de lithium et d'indium comportant 2% atomique d'indium et un matériau en alliage de lithium, d'indium et de baryum comportant 2% atomique d'indium et 2% atomique de baryum ;
- une troisième série de matériaux à base de zinc avec un matériau en alliage de lithium et de zinc comportant 2% atomique de zinc et un matériau en alliage de lithium, de zinc et de baryum comportant 2% atomique de zinc et 2% atomique de baryum.

Ces différents matériaux ont pu être laminés jusqu'à 30-50 micromètres. Néanmoins, les alliages dénués de baryum s'avèrent être plus difficiles à manipuler, du fait qu'ils collent au laminoir en cas de contraintes trop fortes, rendant l'obtention d'épaisseurs plus faibles difficile. Ainsi, l'apport de baryum est avantageux pour l'obtention de pièces présentant une faible épaisseur.

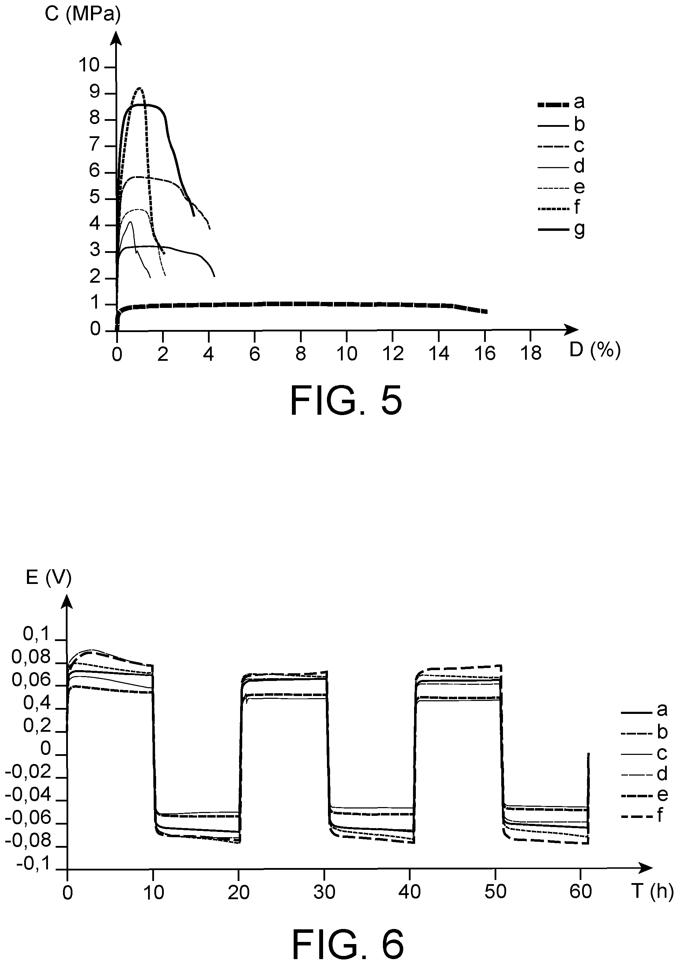

Ces différents matériaux ont ensuite été soumis à des essais de traction sous forme d'éprouvettes de 100 µm d'épaisseur, les différentes éprouvettes ayant été préconditionnées selon le même mode opératoire puis étirées à 2mm/minute. Les résultats obtenus ont ensuite été traités pour obtenir une représentation de la contrainte subie en fonction de la déformation, cette représentation étant illustrée par la figure 5, qui est un graphique illustrant l'évolution de la contrainte C (en MPa) en fonction de la déformation D (en %), la courbe a) étant relative à une éprouvette en lithium métallique, la courbe b) étant relative à l'éprouvette en alliage de lithium et de zinc, la courbe c) étant relative à l'éprouvette en alliage de lithium, de zinc et de baryum, la courbe d) étant relative à l'éprouvette en alliage de lithium et d'aluminium, la courbe e) étant relative à l'éprouvette en alliage de lithium, d'aluminium et de baryum, la courbe f) étant relative à l'éprouvette en alliage de lithium et d'indium et la courbe g) étant relative à l'éprouvette en alliage de lithium, d'indium et de baryum.

Il ressort que le passage d'alliages binaires LiX à 2% atomique à des alliages ternaires LiXBa à 2% atomique en X (X étant le zinc, l'aluminium ou l'indium) et en Ba a permis, dans tous les cas, de gagner sur le couple déformation/contrainte dans le cadre de notre manipulation de traction. Cela démontre l'utilité de l'ajout de baryum dans toutes ces compositions pour améliorer l'étape de laminage.

Enfin, afin de valider l'utilisation possible de ces alliages en électrochimie, ces différents alliages ont testés dans des piles boutons symétriques (à savoir, avec deux électrodes négatives constituées desdits alliages) comportant une membrane en polyoxyde d'éthylène et un électrolyte à base d'un sel LiTFSI, les différentes piles boutons ayant été soumises à trois cycles de charge-décharge sous un régime de 0,1mA/cm² et une capacité de 1 mAh/cm².

Les résultats sont reportés sur la figure 6, qui illustre l'évolution du potentiel E (en V) en fonction du temps T (en h), la courbe a) étant relative à l'alliage LiZn, la courbe b) étant relative à l'alliage LiZnBa, la courbe c) étant relative à l'alliage LiAI, la courbe d) étant relative à l'alliage LiAlBa, la courbe e) étant relative à l'alliage Liln et la courbe f) étant relative à l'alliage LilnBa.

Dans tous les cas, les alliages binaires présentent une tension de plateau d'échange légèrement plus faible que les alliages ternaires. Ainsi, les alliages ternaires présentent probablement une résistance d'interface un peu plus grande que les alliages binaires. Néanmoins, les performances en termes de tension de cellules sont suffisamment analogues pour que cela ne compromette pas l'utilisation des alliages ternaires dans des batteries.

## Revendications

1. Électrode négative pour générateur électrochimique au lithium **caractérisée en ce qu'**elle comprend, comme matériau actif, un alliage comprenant, outre du lithium et du baryum, un troisième élément choisi parmi le magnésium, le zinc, l'indium, le calcium, le gallium et l'aluminium, le baryum étant présent dans l'alliage à hauteur d'au plus 20% atomique.

2. Électrode négative selon la revendication 1, dans laquelle, pour l'alliage comprenant du lithium et du baryum, le baryum est présent dans l'alliage à hauteur de 2 à 20% atomique.

3. Électrode négative selon la revendication 1 ou 2, dans laquelle, pour l'alliage comprenant du lithium et du baryum, le baryum est présent dans l'alliage à hauteur de 2 à 10% atomique.

4. Électrode négative selon l'une quelconque des revendications précédentes, qui constituée uniquement du matériau actif, qui est l'alliage comprenant du lithium et du baryum.

5. Électrode négative selon l'une quelconque des revendications précédentes, dans laquelle le troisième élément est présent en une teneur allant de 2 à 20% atomique et, de préférence, de 2 à 10% atomique.

6. Électrode négative selon l'une quelconque des revendications précédentes, qui se présente sous forme d'une feuille ou plaque présentant une épaisseur allant de 5 à 50 µm.

7. Électrode négative selon l'une quelconque des revendications précédentes, qui est autosupportée.

8. Générateur électrochimique comprenant au moins une cellule électrochimique comprenant une électrode positive comprenant, comme matériau actif, un matériau d'insertion du lithium; une électrode négative et un électrolyte conducteur d'ions lithium disposé entre ladite électrode négative et ladite électrode positive, **caractérisé en ce que** l'électrode négative est telle que définie selon l'une quelconque des revendications 1 à 7.

9. Générateur électrochimique selon la revendication 8, dans lequel le matériau d'insertion du lithium est choisi parmi les oxydes lithiés comprenant au moins un élément métallique de transition, les phosphates lithiés comprenant au moins un élément métallique de transition, du dioxyde de manganèse et les mélanges de ceux-ci.

10. Générateur électrochimique selon la revendication 9, dans lequel l'oxyde lithié comprenant au moins un élément métallique de transition est un oxyde de formule suivante :
LiMO₂
dans laquelle M est un élément choisi parmi Ni, Co, Mn, AI, Mg et les mélanges de ceux-ci.

11. Générateur électrochimique selon l'une quelconque des revendications 8 à 10, dans lequel l'électrode positive comprend au moins un additif conducteur électronique et/ou au moins un liant.

12. Générateur électrochimique selon la revendication 11, dans lequel le liant est un liant polymérique.

13. Générateur électrochimique selon l'une quelconque des revendications 8 à 12, dans lequel l'électrolyte conducteur d'ions lithium est un électrolyte liquide comprenant au moins un solvant organique et au moins un sel de lithium.
